# EUROPEAN PATENT APPLICATION

(11) **EP 2 664 864 A1**
(43) Date of publication of application: **20.11.2013**
(21) Application number: 13167531.6
(22) Date of filing: 13.05.2013
(51) Int. Cl.: F24F 11/00

(54) **Method for controlling the power consumption in a district cooling system**

(30) Priority: 14.05.2012 SE 1250487
(71) Applicant: Ecofective AB, 101 23 Stockholm (SE)
(72) Inventor: Wildig, Thomas, 194 92 UPPLANDS VÄSBY (SE)
(74) Representative: Örtenblad, Johan Tore

(57) **Abstract**

Method for controlling the distributed cooling power in a district cooling network to which several properties (2) are connected, characterized in that the method comprises the steps a) to establish a certain group (6) of said properties (2), which properties comprise at least one sensor (38) for indoors temperature each and are associated with a respective upper temperature limit for the indoors temperature; b) for each of the properties in the certain group (6), to measure the indoors temperature in the property in question using said sensor (38) for indoors temperature and to establish a certain time value, constituting the expected time until the indoors temperature of the respective property reaches the respective upper temperature limit at a certain decreased cooling power, which decreased power is lower than a certain respective normal power level; c) to calculate an expected total power in the district cooling network during a future time period; and d) in case the said expected total power exceeds a predetermined value, during said time period only to distribute the respective decreased cooling power to one or several of the properties in said group (6) for which the respective time value is larger than the length of the future time period, so that the total power no longer exceeds the predetermined value.

## Description

The present invention relates to a method for controlling the consumption of cooling in a district cooling system to which a number of properties are connected.

District cooling is an efficient way of cooling a set of properties where so is needed, such as during warm weather but also during cooler weather for instance for solar energy plants, conference- or industry premises and server rooms and the like. There is in particular a cooling need present in office- and industrial properties, but also in certain apartment houses. A central plant can extract and distribute cooling to many properties, which also results in environmental advantages and decreases the need for electric energy.

The property use in such a set of properties largely follows a certain periodic rhythm, in which the cooling need varies depending on the time of day, the day of week and so on. During the day, when many people are indoors and emit heat, the cooling need is often relatively large. In the middle of the day in a weekday in an apartment house, or during the weekend in an office building, the cooling need is on the other hand relatively small, since fewer people typically are present indoors. Furthermore, weather variations, notably varying outdoor temperatures, give rise to variations in necessary outtake of cooling in order to be able to maintain a desired indoor temperature. In order to function well during all operation prerequisites, the central district cooling plant must therefore be dimensioned for delivering high peak powers, which for instance often occur during the afternoons. High maximum powers in district cooling plants are however associated with large marginal costs. For this reason, and since the maximum power of the plant is typically only used seldom, such as for instance only between 3 pm and 5 pm weekdays and during warm weather, this problem is conventionally often solved using an additional capacity, which produces cooling in a way which is often less environmentally friendly. Compared to the case with for instance district heating, the marginal cost for raising the power in a district cooling plant is even higher pre produced kWh.

Hence, it would be desirable to be able to achieve a way to operate a district cooling plant so that the highest power peaks are lower than during conventional operation, which then would mean that the maximum capacity of the plant can be smaller, or that the available capacity in a given network can be exploited more efficiently, which for instance can result in that more properties can be connected to a certain cooling source.

Moreover, it would be desirable to achieve a method which decreases the cooling losses during operation of such a district cooling plant.

The present invention solves the above described problems.

Thus, the present invention relates to a method for controlling the distributed cooling power in a network for district cooling, to which a number of properties are connected, and is **characterised in that** the method comprises the steps to a) establish a certain group of the said properties, which properties comprise at least one sensor each for indoors temperature and are associated with one respective upper temperature limit each for the indoors temperature; b) for each of the properties in the certain group, measure the indoors temperature in the property in question using the said sensor for the indoors temperature and establish a certain time value, which constitutes the expected time until the indoors temperature of the respective property has risen from the current indoors temperature and up to the respective upper temperature limit at a certain decreased cooling power, which decreased cooling power is lower than a certain respective normal cooling power level; c) calculate an expected total distributed cooling power in the network for district cooling during a future time period; and d) if the said expected total distributed cooling power exceeds a predetermined value, during the said time period only distribute the respective decreased cooling power to one or several of the properties in the said group, for which the respective time value is larger than the length of the future period, so that the total distributed cooling power does no longer exceed the predetermined value, after which the indoor temperature is measured in the or those properties to which the respective lower cooling power presently is distributed, the calculated time values for the properties in the group are updated, and one or several of the properties that presently have a respective calculated time value which is larger than the time which remains of the period are cooled at their respective decreased cooling power level, while the other properties in the group are cooled using a respective normal cooling power level, and in that the control in step d) of the magnitude of the cooling power distributed to the said one or several of the properties in the group is performed by a respective local control device, arranged in each respective property, controlling the circulation in a cooling circuit which is also locally arranged.

In the following, the invention will be described in detail, with reference to exemplifying embodiments of the invention and to the enclosed drawings, wherein:

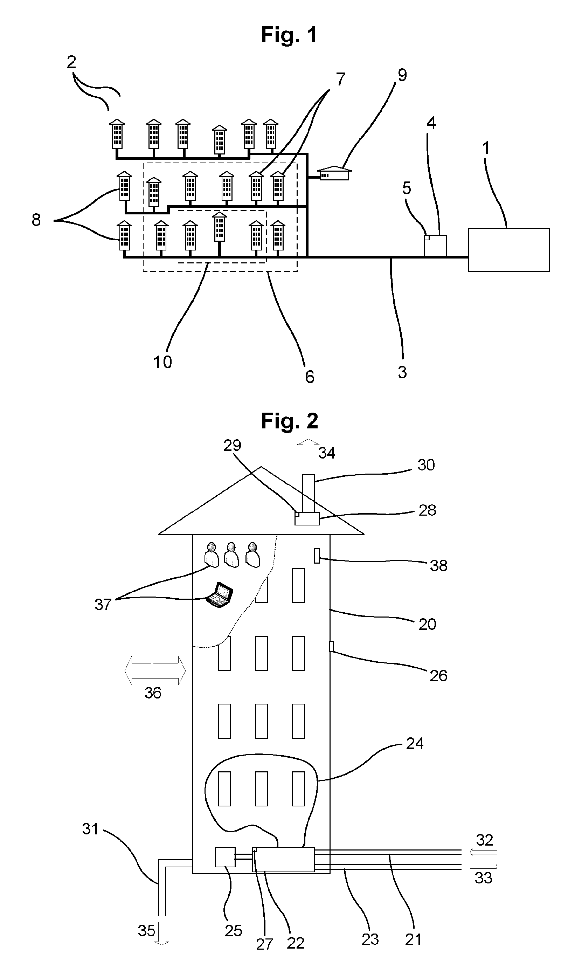

Figure 1 is an explanatory sketch of a set of properties which is cooled according to the present invention by a district cooling system; and Figure 2 is an explanatory sketch of a property being cooled according to the present invention.

Figure 1 shows a district cooling plant comprising a central cool source 1, in the form of an absorption device in a power plant, a central compressor device, a geothermal cooling device, a plant for so-called free cooling or the like. The cool source 1 is arranged to, during warm weather, or when cooling is desired otherwise, distribute cool to a number of properties 2, connected to the source 1. The distribution takes place using a main conduit 3 for a suitable cooling carrier, such as cold water.

The properties 2 may be of different types, but it is preferred that at least most of them, preferably all of them, are office blocks or -premises, industrial properties such as server rooms and/or apartment building properties for several families.

A central control device 4 is arranged to control the cooling power being distributed to each property 2. Herein, the expression that a "cooling power is distributed to a property" is to be interpreted so that a certain amount of thermal energy per time unit is transferred from a certain property to the cooling medium and thereby cools the property in question. The control can for instance take place using a wireless sender 5 which communicates with receivers in each respective property (see below), which properties in this case are equipped with suitable conventional actuators for controlling the circulation of cooling carrier in the property in question, such as the circulation in a cooling circuit indoors. Another example is that the cooling medium is thermally connected, via a heat exchanger, to an existing system for cooling in the property in question, such as a cooled ventilation circuit or one or several fans. In this case, the circulation of the cooling medium past the heat exchanger or the internal circulation of cooling medium in said cooling system can be controlled using conventional actuators. Instead of the wireless sender 5, for instance a wired or an Internet connected signaling system may be used.

Figure 2 shows an exemplary property 20. Cold water from the cool source 1 arrives at a control unit 22 in the property 20 via an incoming conduit 21, and returns to the cool source 1 via an outgoing conduit 23. The control unit 22 is, in turn, connected to a cooling circuit 24, being illustrated principally and arranged to distribute the incoming cold water to cooling units arranged in the various rooms in the property.

The control unit 22 comprises a wireless receiver 27, arranged to communicate with the sender 5. Furthermore, a control device 28 for a ventilation system comprises a receiver 29 arranged to communicate with the sender 5. Indoors air is ventilated off from the ventilation system through a chimney 30.

Alternatively, all communication between the control device 4 and the property 20 can take place via the control unit 22, which in turn controls for the example the control devices 25 and 28. Other actuators in the property 20 can be controlled, in a corresponding way, either directly from the control device 4 or from the control unit 22. Correspondingly, a sensor 26 for local weather, such as incident solar radiation, wind direction and/or temperature can report either to the control unit 22 or to the control device 4.

The control of how large cooling power which is distributed to the properties in a certain group of properties takes place by one locally arranged control unit in each such respective property controlling the circulation in a likewise locally arranged cooling circuit.

This is exemplified by that the central control device 4 communicates with the local control unit 22, which in turn is connected to local radiator- and ventilation circuits, which may be used for adjusting or decreasing the distributed power from the district cooling network.

Sewage water leaves the property 20 through a sewer conduit 31.

Thus, the energy balance in the property is essentially determined by the following energy flows:
- The difference in thermal energy between incoming cold water 32 and outgoing, heated water 33.
- Supplied or absorbed thermal energy via sewage water 35 heated or cooled in the property.
- Indoors air 34 being ventilated away, possibly after recapture of thermal energy in the exhaust air.
- Thermal losses and heating 36 via the walls, foundation and roof of the property. This parameter depends, among other things, upon current values for outdoor temperature, wind, incident solar radiation and precipitation.
- Supplied thermal energy originating from the use of the property, from various internal sources, exemplified in the property 20 by persons and a computer 37. Cooling inside the property 20 of used hot tap water also constitutes such an internal energy source.

Furthermore, the property 20 comprises at least one sensor 38 for indoors temperature, arranged to measure the indoors temperature in the property 20 and to communicate the measurement value to the central control device 4 in a way which is conventional as such, for example wirelessly such as described above for the communication between the control device 4 and the control unit 22, whereby the sender 5 also constitutes a receiver for wireless signals from the sensor 38. The communication may also take place via the control unit 22. It is preferred that the property 20 comprises several such sensors for indoors temperature, preferably arranged in several different rooms in the property 20.

According to the invention, at first a certain group 6 (see figure 1) of the properties 2 being connected to the cool source 1 is selected. Which ones of the properties 2 that are selected depends on the specific operation applications, but all properties 7 in the group 6 comprise at least one sensor 38 each for indoors temperature, arranged to communicate the measurement value to the control device 4. Properties 8 which are not selected may for example be such properties that lack such indoors temperature sensors connected to the control device 4; that lack the possibility to be controlled from the central control device 4; or that for any other reason lack prerequisites to take part in the method described herein. Other properties 9, which are not selected, may for example have specific operation requirements, such as that they must keep a certain constant indoors temperature, which for example may be the case for hospitals, certain archives and so on.

Furthermore, each property 7 in the group 6 is associated with a respective upper temperature limit for the indoors temperature, above which the indoors temperature of the property must not rise.

The method according to the present invention considers the power control of the properties 2 in the district cooling network during a certain future time period. Which future time period to use depends on the specific application, but may be a period which commences immediately or later, and may for example be a certain part of a day, such as between 3 pm and 0 am, or between 6 pm and 0 am the coming evening.

For each of the properties 7 in the group 6, the indoors temperature is measured and communicated to the control device 4. Thereafter, for all properties 7 a certain time value is established, which constitutes an estimation of the expected time until the indoors temperature of the respective property has risen from the current indoors temperature up to the respective upper temperature limit in case only a certain decreased cooling power is distributed to the property in question starting immediately, which decreased power is lower than a certain respective normal power level. Thus, the time value is the length of a certain time period.

The normal power level is selected to represent a cooling power which is distributed to the property in question during normal operation under the current operation conditions. The normal power level may for instance be the currently distributed cooling power to the property under the current operation state, or the calculated cooling power to be distributed to the property in question, if normal operation were to be maintained, during the future time period, given information regarding expected weather and control parameters for the cooling distribution to the property.

The certain lower power level is constituted by a suitable power level which is lower than the normal power level, and preferably lower than an expected lowest possible power level which will be able to maintain the prevailing indoors temperature during the above indicated future time period, without the temperature rising during the same and given the then expected operation prerequisites in terms of outdoors temperatures and such. According to a preferred embodiment, the lower power level corresponds to that the distribution of cooling energy to the property in question, in other words the magnitude of the heat transfer between the property and the cooling agent, is completely shut off.

Moreover, an expected total power in the district cooling network is calculated for the future time period. It is preferred that this total power represents an expected maximum, instantaneous distributed power during the future time period, and that it is calculated based upon available data regarding the construction and use of the properties, meteorological forecasts and so on. See below for a more detailed description of this.

According to the invention, a predetermined, maximum power is established for the cool source 1, that is a certain predetermined maximum amount of cool which is transferred from the cool source 1 per time unit. According to a preferred embodiment, this maximum power is the actual maximum power for the system, in other words the amount of cool per time unit which the system can emit, more preferably the actual maximum power minus a certain predetermined security margin.

In case the above mentioned expected total power exceeds this predetermined maximum power, according to the present invention the control device 4 will, during the said time period, control the distribution of cooling energy so that one or several certain of the properties 7 in the group 6 are only receiving the above described lower cooling power(s). By in this way sufficiently decreasing the cooling power to at least one of the properties 7, it may be achieved that the total distributed power during the future time period does not exceed the predetermined value. Thus, the power peak which, during conventional operation of the system, would have followed upon the increased outdoors temperature, the increased incident solar radiation or the other conditions forming the basis for the forecast high total power, may be eliminated, by temporarily cutting down on the cooling power distributed during the period to one or several properties.

According to the invention, the above described calculated respective time value is used for each property 7 in the group 6 in order to decide to what or which properties the respective lower power is to be distributed. More specifically, one or several of the properties 7 in the group 6 are selected to form an additional group 10, in which all properties in the group 10 has a respective time value which is larger than the future time period. The said selection is also made so that the expected total power distributed from the source 1, when the group 10 is operated at the respective lower powers, no longer exceeds the predetermined value during the future time period. Since the respective time period of the properties belonging to the group 10 is longer than the future period, their respective indoors temperatures will not rise above the respective upper temperature limit during operation at the respective lower power during the future period.

According to a preferred embodiment, the or those properties in the group 6 having the largest respective time value is or are selected to the group 10.

Moreover, it is preferred that the single property which has the largest time value is selected in a first step, after which the property having the second largest time value is selected, and so on, until the total expected power does not exceed the predetermined value, whereby the thus selected properties constitute the group 10.

Since the control device 4 in this way is arranged to distribute a respective lower cooling power to a limited share 10 of the connected set 2 of properties, it is hence achieved that the coming power peak can be decreased, which results in that the system can be dimensioned with a lower maximum capacity and still be able to deliver cooling at an expected service level.

Furthermore, it has been found that in most sets of properties connected to district cooling, there is in general at a given point in time properties for which the supplied district cooling energy can be temporarily decreased without their respective indoors temperature risking to rise above a contractually regulated highest temperature. Actually, according to the invention, during operation the respective "thermal inertia" of the properties, that is their volumetric thermal capacity, is exploited in order to level out the power peaks loading the cool source 1.

Moreover, the thermal losses in the district cooling network decrease as a whole, since these are proportional to the distributed cooling power and therefore decrease with decreasing variance.

Further, it is possible that the operational prerequisites are changed during the future time period. Also, it may be so that other properties than those in the group 10 sometime into the future time period prove to be more suitable for a decreased cooling supply. Therefore, it is preferred to, while the future time period is running, repeatedly update what properties that at the moment are to take part in the group 10 for lower power distribution. According to a preferred embodiment, such updating follows the same rules as the original selection, and preferably takes place periodically, such as at least once every hour, alternatively continuously.

In other words, the indoors temperature in that or those properties to which the respective lower cooling power at the moment is distributed is measured, and the calculated time values for the properties in the certain group are updated. Then, one or several of the properties which presently have a respective calculated time value which is larger than the time which remains of the period, is or are cooled at its or their respective lower power level. The selection is coordinated so that the total distributed power to all connected properties 2 does not exceed the predetermined value, while the rest of the properties in the group 6, except those taking part in the group 10, among which possibly properties which earlier during the period were cooled at their respective lower power level, are cooled with a respective normal power level.

In this way, the above described advantages can be achieved, at the same time as the variations of indoors temperature in individual properties may be decreased.

It is preferred that the control device 4 calculates the above described estimation of the total power distributed from the source 1 during the future time period based upon available information of the system, the individual connected properties 2 as well as additional available information regarding the expected operation conditions during the future time period.

According to a preferred embodiment, the calculation is at least partially based upon historical data regarding the total power distributed to the connected properties 2 during different types of operation conditions. For example, different historically measured total powers during periods of different outdoors temperatures may be available in tabulated form, whereby the calculation can take place by interpolation or in some other suitable, conventional way.

According to another preferred embodiment, the calculation is at least partly based upon a measured value for the outdoors temperature near at least one of the connected properties 2 in the certain group. The warmer the outdoors temperature, the higher cooling power is required to maintain a desired indoors temperature. It is also preferred that the current incident solar radiation and the current local wind- and precipitation prerequisites, such as measured for instance using the sensor 26, forms the basis for the said calculation, in the corresponding way.

According to an additional preferred embodiment, the calculation is based at least partly upon a weather forecast covering the mentioned future time period and at least one of the properties 2. Even if the present outdoors temperature gives a good indication as to the power requirement during a future period, especially if the future period soon commences, a weather forecast gives better precision during the calculation.

In case an outdoors temperature measurement or a weather forecast is only relevant to some of the connected properties 2, for instance due to local meteorological differences, an estimation, which is carried out in a way which is conventional as such, of the operation conditions for the rest of the properties may be used.

It is preferred that the control device 4 is arranged to control the distribution of cooling power to connected properties to which the power is not decreased using a control algorithm, which is known beforehand and which may be conventional as such. In this case, it is preferred that the expected total power distribution is calculated based at least partly upon the known properties of this control algorithm. For example, a weather forecast covering a certain property may form the basis for a simulation of how the control algorithm will control the cooling power to the property in question, given an initial indoors temperature and the upper temperature limit for the property, and based upon such a simulation the total cooling power across the time period can be calculated for the property. Thereafter, the total cooling power for all connected properties 2 can be calculated based thereupon.

Moreover, it is preferred that the total distributed power is calculated at least partly on historical data regarding periodical patterns in the use 37 of the connected properties 2, and the additional cooling power which such use is expected to give rise to inside the properties during the future time period. Different types of uses, such as presence of persons and animals inside the properties; use of technical equipment, lighting and hot tap water; airing and so on constitute either heat sources or heat sinks affecting the operation of the cooling system. Since such activities are largely periodical, and to some extent predictable in their nature, they may be measured and thereafter used during the calculation in order to give a more unbiased value of the total power during the future period.

It is also preferred to use a priori knowledge regarding at least one, preferably all thermal characteristics of the properties, especially their thermal capacity, as a basis for the calculation of the total power distribution during the future time period. In other words, in an initial step information is collected concerning the thermal leakage through the shell of the property and the ventilation 34, which information for instance can be collected from available type descriptions of different properties, and may be supplemented with information regarding heat recovery systems for the ventilation, any installed additional insulation, and so on, alternatively by actual measurements on the spot. Then, this information, together with corresponding data describing additional energy sources or -sinks, such as the sewage water 35, may be used to create a model of the property as a body having a certain thermal capacity. Finally, the model can be used in order to calculate the expected power requirement during the future time period, especially in combination with historical data regarding the use and/or the used control algorithm.

It is possible to, in different ways and depending on available information, combine the different above described ways to calculate the expected total energy need for cooling during the future period, with the overarching purpose of achieving an estimation which is as accurate as possible.

In a way similar to the above described with respect to the calculation of the expected total cooling power for the set of properties, it is preferred that the time value for at least one, preferably all, of the properties 7 in the group 6 is calculated based upon the volumetric thermal capacity of the property in question as modeled using available information regarding the energy flows 34, 35, 36 and so on, according to the above. For example, using such a thermal model, suitable conventional differential equations may be set up to describe the indoors temperature of the property 20 as a function of time, supplied cooling and other operation conditions. Such equations may then be solved in order to calculate the expected time until the indoors temperature has risen to the upper limit.

It is furthermore preferred that the time value for at least one, preferably all, properties 7 in the group 6 is calculated based upon a measured value for the outdoors temperature near the property in question and/or a weather forecast covering the said future time period and the property in question, analogously to the above described for the expected total power.

Moreover, and also analogously to the above described for the expected total power, it is preferred that the said time value for at least one, preferably all, of the properties 7 in the group 6 is calculated based upon a control algorithm which is known as such and which controls the cooling power which is distributed to the property in question, with the purpose of maintaining an indoors temperature therein which is below the highest allowable level, and/or historical data regarding periodical patterns in the use of the property and the additional cooling- and/or heating power that this use is expected to give rise to in the property during the future time period.

The above described, different types of information can be combined in many ways in order to maximize the reliability in the estimation of the time value.

A method according to the present invention thus achieves that a smoother operation can be achieved without need for additional cool sources in order to manage power peaks. The inventors' calculations have shown that a central district cooling plant can be designed with only 70-85% of the maximum capacity which would be required during conventional operation. In many cases, this may also be achieved using software installations in an existing plant, without additional extra equipment than communication links between various sensors, which are often already installed, and the control device 4.

Alternatively, using the invention, more properties may be connected to one central cool source 1, since the cool can be exploited at a smoother and higher level than before, when the maximum capacity was only used during power peaks.

Above, preferred embodiments have been described. However, it is obvious to the skilled person that many modifications can be made to the described embodiments without departing from the idea of the invention.

In view of a future expected power peak, the cool stores in one or several of the connected properties 2 may for example be increased before the period in question commences. Thus, the indoors air of a property can be cooled one or a couple of °C below the normal temperature before the period commences, which increases the time value of the property and therefore the possibilities to adjust down the energy supply to the property in question during the future time period without rising above the upper temperature limit.

As a supplement or alternative to the historical data regarding the operation of the property which may form the basis for the calculation of the expected total distributed cooling power and the time values of the individual properties, an adaptive method may advantageously be used, according to which operation data is compiled by a central device, such as the control device 4, and where the parameters of an as such conventional energy model of the whole system or individual properties continuously are adjusted based upon actual results of different operational situations. It is especially preferred that energy effects from the use of the properties are quantified this way, by measuring the actual indoors temperature given supplied cooling power, the outdoors temperature, incident solar radiation and the volumetric thermal capacity of the building body. Such a method will be able to calculate ever more unbiased values for both expected total powers and the above described time values.

Thus, the invention is not to be limited to the described embodiments, but may be varied within the scope of the enclosed claims.

## Claims

1. Method for controlling the distributed cooling power in a district cooling network to which several properties (2) are connected, **characterized in that** the method comprises the steps
a) to establish a certain group (6) of said properties (2), which properties comprise at least one sensor (38) for indoors temperature each and are associated with a respective upper temperature limit for the indoors temperature;
b) for each of the properties in the certain group (6), to measure the indoors temperature in the property in question using said sensor (38) for indoors temperature and to establish a certain time value, constituting the expected time until the indoors temperature of the respective property has risen from the current indoors temperature and up to the respective upper temperature limit at a certain decreased cooling power, which decreased power is lower than a certain respective normal power level;
c) to calculate an expected total distributed cooling power in the district cooling network during a future time period; and
d) in case the said expected total power exceeds a predetermined value, during said time period only to distribute the respective decreased cooling power to one or several of the properties in said group (6) for which the respective time value is larger than the length of the future time period, so that the total distributed cooling power no longer exceeds the predetermined value, after which the indoors temperature in the property or those properties to which the respective decreased cooling power presently is being distributed is measured, the calculated time values for the properties in the group (6) are updated, and one or several of the properties that presently has or have a respective calculated time value which is larger than the remaining time of the period are cooled at its or their respective decreased power level, so that the total power does not exceed the predetermined value, while the other properties in the group (6) are cooled at a respective normal power level,
and **in that** the control in step d) of the size of the cooling power which is distributed to said one or several of the properties in the group (6) takes place using a control device, locally installed in each such respective property, which is caused to control the circulation in a likewise locally arranged cooling circuit.

2. Method according to claim 1, **characterised in that** in step d), the respective lower cooling power is only distributed to the or those of the properties in said group (6) for which the respective time value is largest.

3. Method according to claim 1 or 2, **characterised in that** the expected total distributed cooling power in step c) is calculated based upon historical data regarding the total distributed cooling power during different types of operation conditions.

4. Method according to any one of the preceding claims, **characterised in that** the expected total distributed cooling power in step c) is calculated based upon a measured value for the outdoors temperature near at least one of the connected properties (2).

5. Method according to any one of the preceding claims, **characterised in that** the expected total distributed cooling power in step c) is calculated based upon a weather forecast covering the said future time period and at least one of the connected properties (2).

6. Method according to any one of the preceding claims, **characterised in that** the expected total distributed cooling power in step c) is calculated based upon a control algorithm which is known per se, and which controls the size of the cooling power being distributed to the connected properties (2) with the purpose of maintaining an indoors temperature in each of the said properties (2) below a certain highest allowable level.

7. Method according to any one of the preceding claims, **characterised in that** the expected total distributed cooling power in step c) is calculated based upon historical data regarding periodical patterns in the use (37) of the connected properties (2) and the additional cooling-and/or heating power, which this use (37) is expected to give rise to inside the properties (2) during the future time period.

8. Method according to any one of the preceding claims, **characterised in that** the time value for at least a certain one (20) of the connected properties (2) is calculated based upon the thermal capacity of the property (20).

9. Method according to any one of the preceding claims, **characterised in that** the time value for at least one certain property (20) in the certain group (6) is calculated based upon a measured value for the outdoors temperature near the property (20).

10. Method according to any one of the preceding claims, **characterised in that** the time value for at least one property (20) in the certain group (6) is calculated based upon a weather forecast covering the said future time period and the property (20).

11. Method according to any one of the preceding claims, **characterised in that** the time value for at least one property (20) in the certain group (6) is calculated based upon a control algorithm, which is known as such and which regulates the cooling power which is distributed to the property (20) with the purpose of maintaining an indoors temperature therein which is below a certain highest allowable level.

12. Method according to any one of the preceding claims, **characterised in that** the time value for at least one property (20) in the certain group (6) is calculated based upon historical data regarding periodical patterns of the use (37) of the property (20) and the additional cooling- and/or heating power that this use (37) is expected to give rise to therein during the future time period.
